# EUROPEAN PATENT APPLICATION

(11) **EP 4 579 335 A1**
(43) Date of publication of application: **02.07.2025**
(21) Application number: 24223378.1
(22) Date of filing: 27.12.2024
(51) Int. Cl.: G03B 21/14, E01F 9/506, E01C 23/20

(54) **MOVEABLE PROJECTION SYSTEM FOR ROAD MARKINGS**

(30) Priority: 28.12.2023 JP 2023223311
(71) Applicant: Seiko Epson Corporation, Tokyo 160-8801 (JP)
(72) Inventor: SATO, Reito, Suwa-shi, 392-8502 (JP)
(74) Representative: Lewis Silkin LLP

(57) **Abstract**

A projection system is configured to project an image used to paint a road surface marking on a road surface onto the road surface, and includes a projector configured to project the image toward the road surface; a first installer at which the projector is installed; a base at which the first installer is provided; and a moving mechanism configured to move the base.

## Description

The present application is based on, and claims priority from JP Application Serial Number 2023-223311, filed December 28, 2023, the disclosure of which is hereby incorporated by reference herein in its entirety.

### BACKGROUND

### 1. Technical Field

The present disclosure relates to a projection system.

### 2. Related Art

To draw a road surface marking such as characters and symbols on a road surface of a site such as a road and a parking lot, a drawing for the road surface display is first created. In related art, a survey is performed on the site where the road surface marking is actually drawn, and auxiliary lines including outlines of the road surface marking to be drawn are drafted on the road surface, for example, with a piece of chalk. Paint is then applied by a painting apparatus in accordance with the auxiliary lines drafted on the road surface. The road surface marking is thus completed.

An on-site survey and drafting a road surface marking require efforts, and techniques of a skilled operator are required. Attempts have therefore been made to reduce the efforts of and burdens to the operator. For example, JP-A-2015-086590 discloses a road surface marking painting apparatus configured to be capable of communication with global positioning system (GPS) satellites or quasi-zenith satellites. The road surface marking painting apparatus disclosed in JP-A-2015-086590 displays the shape of a road surface marking to be painted and the position of a painting nozzle on the screen of a display section, such as a liquid crystal display, based on signal radio waves received from various satellites. The road surface marking painting apparatus disclosed in JP-A-2015-086590 can perform painting along guidelines on the screen of the display section and readily paint a road surface marking with high accuracy.

JP-A-2015-086590 is an example of the related art.

In the related art, the techniques of a skilled operator are required to draft auxiliary lines, and when the surface on which the auxiliary lines are drawn is a road surface, the traffic in the region where the road surface marking is drawn is restricted or inhibited and the drafting is performed for a long period in the region, so that a large burden is imposed on the operator. In addition, the road surface marking painting apparatus disclosed in JP-A-2015-086590, which requires connection to satellites, is inevitably a large-scale apparatus. Since a satellite communication system can be used under limited environments and used by limited users, it is difficult to easily and quickly use the road surface marking painting apparatus disclosed in JP-A-2015-086590. There is therefore a demand for a system that allows the work of drafting a road surface marking to be easily and quickly performed and reduction in the burden to a constructor and an operator.

### SUMMARY

A projection system according to an aspect of the present disclosure is a projection system configured to project an image used to paint a road surface marking on a road surface onto the road surface, the projection system including: a projector configured to project the image toward the road surface; a first installer at which the projector is installed; a base at which the first installer is provided; and a moving mechanism configured to move the base.

### BRIEF DESCRIPTION OF THE DRAWINGS

FIG. 1 is a side view of a projection system according to an embodiment.
FIG. 2 is another side view of the projection system shown in FIG. 1.
FIG. 3 is a perspective view showing how a road surface marking is drafted by using the projection system shown in FIG. 1.
FIG. 4 is another perspective view showing how a road surface marking is drafted by using the projection system shown in FIG. 1.
FIG. 5 is still another perspective view showing how a road surface marking is drafted by using the projection system shown in FIG. 1.

### DESCRIPTION OF EMBODIMENTS

An embodiment of the present disclosure will be described below with reference to the drawings. In the drawings, elements are drawn at different dimensional scales in some cases for clarity of each of the elements.

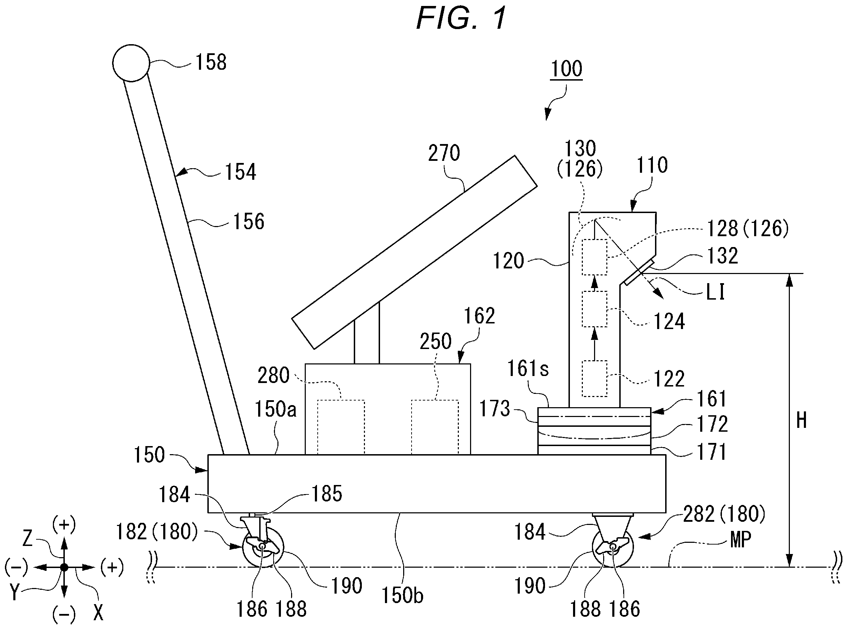

The embodiment of the present disclosure will first be described with reference to FIGS. 1 to 5. FIG. 1 is a side view showing the configuration of a projection system 100 according to the embodiment of the present disclosure viewed along a Y direction, which will be described later. The projection system 100 is a system that projects an image used to paint a marking on a road surface onto the road surface. The projection system 100 includes a projector 110, a first installer 161, a base 150, and a moving mechanism 180, and further includes a second installer 162, a handle 154, a movement restricting mechanism, and a locking mechanism. as shown in FIG. 1.

The projector 110 is a projection apparatus that projects an image used to paint a road surface marking on a road surface onto the road surface. The image represents, for example, a simple line of a road marking out of a road surface marking, a graphic or a sign serving as a symbol, or a contour line of a character or a number, and includes lines or graphics. The format of the road surface marking and the dimensions of the lines or graphics contained in the image are determined based on instructions relating to the road traffic law, road markings, dividing lines, and road markings depending on the content of the road surface marking and the location of the road surface to be painted. The image is enlarged when projected onto the road surface. The original image before projected from the projector 110 is therefore so created in accordance with the enlargement factor and the width and the length of the road surface that the lines or graphics contained in the image enlarged and projected onto the road surface have dimensions based on the instructions described above.

In the following description, one direction parallel to a movement surface MP, at which the projection system 100 is moved, is defined as an X direction, one side in the X direction is defined as a -X side, and the other side in the X direction is defined as a +X side. A direction parallel to the movement surface MP and perpendicular to the X direction is defined as a Y direction, one side in the Y direction is defined as a -Y side, and the other side in the Y direction is defined as a +Y side. A direction perpendicular to the X and Y directions is defined as a Z direction, one side in the Z direction is defined as a -Z side, and the other side in the Z direction is defined as a +Z side. The Z direction is perpendicular to the movement surface MP. The - Z side represents the orientation toward the movement surface MP, and corresponds to the orientation that is the same as that of the vertical direction. Note that the movement surface MP is a road surface RD, which will be described later, when the height of the movement surface MP is equal to the height of the road surface RD.

The projector 110 includes an exterior enclosure 120, a light source 122, a light modulator 124, a projection system 126, and an output section 132. The light source 122, the light modulator 124, and the projection system 126 are housed in the exterior enclosure 120.

The light source 122 outputs color light used to generate image light to be output from the projector 110 toward the +Z side along the Z direction. The color light output from the light source 122 is set in accordance with the color of lines or graphics contained in an image used to paint a road surface marking on a road surface, and is, for example, white or green. The light source 122 is, for example, a laser diode (LD) or a light emitting diode (LED) that outputs predetermined color light.

The light modulator 124 is provided in the optical path of the color light output from the light source 122, and is disposed at the +Z side of the light source 122. The light modulator 124 modulates the color light output from the light source 122 and entering the light modulator 124 from the -Z side in accordance with image information to generate image light having the predetermined color, and outputs the image light toward the +Z side along the Z direction. The light modulator 124 includes, for example, a liquid crystal panel.

The projection system 126 corresponds to a projection optical apparatus. The projection system 126 is provided in the optical path of the image light having the predetermined color and output from the light modulator 124. At least a portion of the projection system 126 is disposed at the +Z side of the light modulator 124. The projection system 126 outputs the image light output from the light modulator 124 and incident from the -Z side toward the +X side and the -Z side.

The projection system 126 includes, for example, a lens system 128 and a reflection mirror 130. The lens system 128 is provided in a region directly irradiated with the image light output from the light modulator 124, and is disposed at the +Z side of the light modulator 124. The lens system 128 includes one or more optical lenses. Examples of the optical lenses may include a plano-convex lens, a plano-concave lens, a biconvex lens, a biconcave lens, a meniscus lens, an aspherical lens, and a freeform surface lens. The reflection mirror 130 is provided in a region irradiated with the image light output from the lens system 128, and is disposed at the +Z side of the lens system 128. The reflection surface of the reflection mirror 130 is provided at the surface of the reflection mirror 130 on which the image light is incident, extends toward the +X side as extending toward the +Z side, and forms a concave curved surface recessed when viewed from the side on which the image light is incident. The reflection surface of the reflection mirror 130 specularly reflects the incident image light and outputs the reflected image light toward the +X side and the -Z side.

The output section 132 is provided in the optical path of the image light output from the projection system 126, and is formed at the +X-side end surface of the exterior enclosure 120. The output section 132 transmits the image light output from the projection system 126 in the exterior enclosure 120, and outputs the image light toward the road surface at the +X side and the -Z side. In the present embodiment, the position on the output surface of the output section 132 through which image light LI passes, for example, the center of the output surface of the output section 132 is located at a position at a height H from the road surface in a state in which the projection system 100 is installed at the movement surface MP, that is, the road surface.

The projector 110 includes in some cases an optical element, a fan, or other elements that are not shown that allow the light modulator 124 to modulate the color light output from the light source 122 into the image light as described above, and cause the projection system 126 to deflect the image light to efficiently output the image light via the output section 132 toward the movement plane MP and the road surface. Examples of the projector 110 may include a wide range of projectors, such as a projector including an ultrashort-focus projection system housed in an exterior enclosure, the projection system including a reflection mirror and having a configuration for rear projection performed by two planar mirrors, including as the configuration for rear projection performed by the one reflection mirror 130, which is a concave mirror, as shown in FIG. 1 and other figures, and a projector including an ultrashort-focus projection lens system provided in an interchangeable manner. Specifically, the projection system 126 in the present embodiment, including the lens system 128 and the reflection mirror 130, is housed in the exterior enclosure 120, but is not necessarily housed in the exterior enclosure 120. At least a portion of the projection system 126 may be installed external to the exterior enclosure of the projector. The projection system 126 may have a structure in which the optical path is deflected.

The first installer 161 is a portion where the projector 110 is installed, and is provided at the base 150. The base 150 constitutes a foundation of a transport assisting mechanism that transports the projector 110, is formed, for example, in the shape of a plate having a predetermined thickness, that is, a predetermined size in the Z direction, and has a plate surface 150a facing upward and a plate surface 150b facing downward. The plate surfaces 150a and 150b of the base 150 extend substantially parallel to an XY plane containing the X and Y directions.

The first installer 161 is provided, for example, at a +X-side portion of the base 150 and provided at the plate surface 150a substantially at the center in the Y direction. The first installer 161 has an installation surface 161s, at which the projector 110 can be installed from the +Z side. The first installer 161 is configured, for example, with a block-shaped combination stage, and includes rotary stages 171, 172, and 173. The rotary stages 171, 172, and 173 correspond to a rotating mechanism.

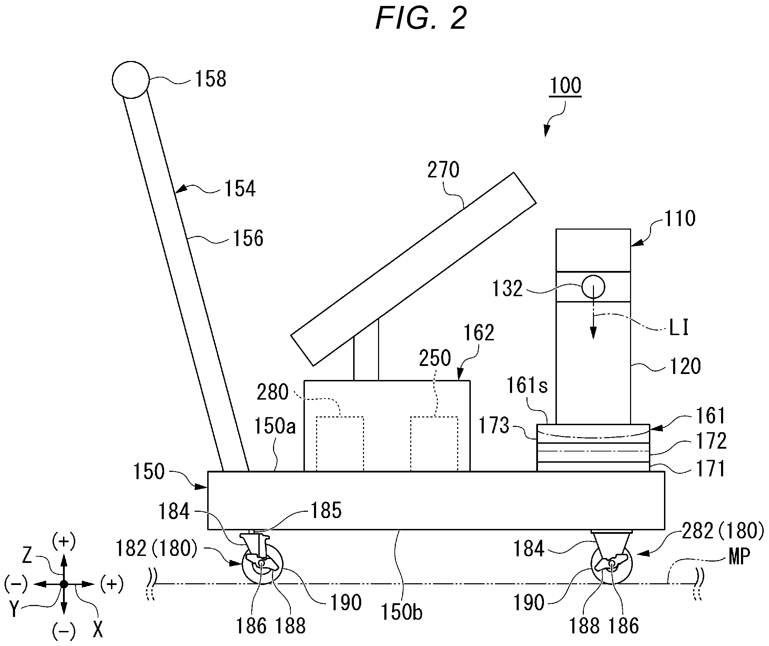

A movable portion of the rotary stage 171 rotates around an axis of rotation parallel to the Z direction along the XY plane parallel to the road surface and the movement surface MP. When the rotary stage 171 is rotated, the projector 110 rotates in the XY plane. In FIG. 1, the image light LI from the projector 110 is output toward the +X side and the -Z side of the base 150. FIG. 2 is a schematic view showing the configuration of the projection system 100 viewed along the Y direction, and shows, for example, a state in which the rotary stage 171 is rotated by 90° around the axis of rotation from the state shown in FIG. 1. When the rotary stage 171 of the first installer 161 is rotated, the image light LI from the projector 110 is output, for example, toward the +Y side or the -Y side and the -Z side of the base 150, as shown in FIG. 2. The angle of rotation of the rotary stage 171 around the axis of rotation is freely adjusted primarily within a range of 180°, that is, within a range from -90° to +90° with respect to a state in which the image light LI is output along the X direction as shown in FIG. 1.

The rotary stage 172 is mounted on the +Z side of the rotary stage 171, as shown in FIGS. 1 and 2. A movable portion of the rotary stage 172 rotates around an axis of rotation parallel to the Y direction along an XZ plane containing the X and Z directions. When the rotary stage 172 rotates, the projector 110 rotates in the XZ plane, so that the orientation of the image formed by projecting the image light onto the road surface receives fine adjustment. The rotary stage 173 is mounted on the +Z side of the rotary stage 172. The +Z-side surface of the rotary stage 173 forms the installation surface 161s. A movable portion of the rotary stage 173 rotates around an axis of rotation parallel to the X direction along a YZ plane containing the Y and Z directions. When the rotary stage 173 is rotated, the projector 110 rotates in the YZ plane, and the orientation of the image formed by projecting the image light onto the road surface receives fine adjustment. The projection system 100 according to the present embodiment includes the rotary stages 171, 172, and 173, which rotate the projector 110 as the rotating mechanism, and may include none of the rotary stages 171, 172, and 173. The projection system 100 may not include any rotating mechanism, but the projector 110 may be directly fixed to the first installer 161 so as to project light in a specific direction.

The first installer 161 includes in some cases a wall portion that is not shown but surrounds the projector 110 from the -Y side, the +Y side, and the +Z side of the projector 110, in addition to the rotary stages 171, 172, and 173.

The second installer 162 is a portion where an electronic instrument 250, which controls the image projected by the projector 110, is installed, and is provided at the base 150. The second installer 162 is provided, for example, at the plate surface 150a substantially at the center of the base 150 in the X and Y directions. The second installer 162 has, for example, the shape of a box. The electronic instrument 250 is housed in the box-shaped second installer 162.

The electronic instrument 250 is electrically coupled to the light modulator 124 of the projector 110 via wires that are not shown or wirelessly, and transmits information on an original image of a road surface marking as the image information to the light modulator 124. The electronic instrument 250 is, for example, a desktop computer, and is replaced in some cases with a tablet terminal that can be readily installed at and removed from the second installer 162. The electronic instrument 250 includes a processor that controls an image to be transmitted to the light modulator 124. The processor of the electronic instrument 250 holds the information on the original image of the road surface marking, and controls the image by adjusting the magnitude and timing of an electric signal related to the image information to be transmitted to the light modulator 124. The electronic instrument 250 is electrically coupled in some cases also to the light source 122 of the projector 110 via wires that are not shown or wirelessly. In this case, the processor of the electronic instrument 250 adjusts an electric signal that adjusts the amount of the color light output from the light source 122 to the light source 122, in accordance with the electric signal related to the image information to be transmitted to the light modulator 124.

In addition to the electronic instrument 250, a power supply 280 for the projector 110 and the electronic instrument 250, and a display apparatus 270 are installed at the second installer 162. The power supply 280 is housed, for example, in the box-shaped second installer 162, as the electronic instrument 250. The display apparatus 270 is installed at an outer wall surface substantially parallel to the XY plane at the +Z side of the box-shaped second installer 162 via a support extending along the Z direction.

The display apparatus 270 displays toward the -X side, for example, an image projected by the projector 110, the electric signals transmitted from the electronic instrument 250 to the light modulator 124 and the like, and information on the movement of the base 150. The display surface of the display apparatus 270 inclines with respect to the X and Z directions when viewed along the Y direction, and extends from the -Z side toward the +Z side as extending from the -X side toward the +X side.

The handle 154 is an element used to move the base 150 along the movement surface MP, and is provided, for example, at a -X-side portion of the plate surface 150a substantially at the center of the base 150 in the Y direction. The handle 154 includes two shafts 156 and a grip 158.

The shafts 156 extend from the base 150 toward the +Z side. The axial line of each of the shafts 156 inclines with respect to the Z direction when viewed along the Y direction, and extends from the +X side toward the -X side as extending from the -Z side toward the +Z side. The -Z-side end of one of the two shafts 156 is coupled to an -X-side and -Y-side end portion of the plate surface 150a of the base 150. The -Z-side end of the other of the two shafts 156 is coupled to an -X-side and +Y-side end portion of the plate surface 150a of the base 150. The +Z-side end of each of the shafts 156 is located at least at the +Z side of the output section 132 of the projector 110, on the +Z side of the +Z-side end of the display apparatus 270, and at the -X side of the -X-side end of the base 150. In other words, the height from the movement surface MP, that is, the road surface, to the center of the grip 158 in the Z direction is greater than the height H of the output section 132 from the road surface.

The grip 158 is coupled to the two shafts 156, links, for example, the +Z-side ends of the two shafts 156 to each other along the Y direction, and extends along the Y direction. The grip 158 is so provided that a user who is not shown but uses the projection system 100 can grip the grip 158 to move the base 150 along the movement surface MP. To this end, the length of the grip 158 in the Y direction is so set, for example, that an appropriate margin is added to the separation distance in the Y direction between both hands of the user of the projection system 100 when gripping the grip 158. The grip 158 is provided in some cases with operation buttons and a display surface that are not shown but relating, for example, to the movement of the base 150.

The moving mechanism 180 is disposed at the plate surface 150b of the base 150 and moves the base 150. The moving mechanism 180 includes, for example, wheels 190 of four casters 282. The casters 282 are provided at the plate surface 150b of the base 150 at a -X-side and -Y-side end portion, a -X-side and +Y-side end portion, a +X-side and -Y-side end portion, and a +X-side and +Y-side end portion.

The casters 282 each include a body 184, an axle 186, a stopper 188, and the wheel 190. Each of the casters 282 is what is called a fixed wheel, and is a caster including no turnable portion but including only the rotating wheel 190.

In each of the casters 282, the body 184 is coupled to the plate surface 150b and extends from the plate surface 150b toward the -Z side. The width of the body 184 in the XY plane decreases as the body 184 extends toward the -Z side. That is, the body 184 narrows as extending toward the -Z side. The body 184 is formed so as to sandwich the wheel 190 at opposite sides in the Y direction, in which the axle 186 extends. The axle 186 is disposed at an -Z-side tip portion of the body 184, extends in parallel to the Y direction, and passes through a central portion of the wheel 190 and a -Z-side end portion of the body 184 along the Y direction. The wheel 190 rotates in the circumferential direction around the axis of the axle 186. The -Z-side end of the wheel 190 is in contact with the movement surface MP.

When the casters 282 are provided, the bodies 184 are fixed to the plate surface 150b of the base 150, so that the base 150 moves along the X direction as the wheels 190 rotate, and the moving direction of the base 150 is restricted. The bodies 184 of the casters 282 correspond to the movement restricting mechanism.

Out of the four casters 282, the two casters 182 at the -X side or the +X side or all the four casters 282 may be replaced with casters 182, which will be described below. In the present embodiment, two casters, that is, the caster 282 disposed at the -X side and -Y side end portion and the caster 282 disposed at the -X side and +Y side end portion are replaced with the casters 182. The casters 182 each include the body 184, a main shaft 185, the axle 186, the stopper 188, and the wheel 190. The casters 182 are each what is called a turnable wheel, and a caster in which a pivotal portion that is not shown and the wheel 190 both rotate.

The body 184 is coupled to the plate surface 150b via the main shaft 185 and the turnable portion, which is not shown, and extends from the plate surface 150b toward the -Z side. The main shaft 185 extends along the Z direction. The turnable portion is turnable in the circumferential direction, that is, in the XY plane around an axis of the main shaft 185 that is parallel to the Z direction. The body 184 is fixed to the turnable portion and rotates in the XY plane as the turnable portion turns. The axle 186 is disposed at an -Z-side tip portion of the body 184, extends in parallel to one direction in the XY plane, and passes through a central portion of the wheel 190 and a -Z-side end portion of the body 184 along the one direction. The body 184 is formed so as to sandwich the wheel 190 at opposite sides in the one direction, in which the axle 186 extends. When the casters 182 are provided, the turnable portion turns in the XY plane around the axis of the main shaft 185, so that the one direction in which the axle 186 extends, that is, the direction in which the axis of the axle 186 extends turns in the XY plane, the base 150 moves in the XY plane as the wheel 190 rotates, and the moving direction of the base 150 is freely changed in the XY plane and the movement surface MP.

In each of the casters 182 and 282, the stopper 188 is provided outside the body 184, which sandwiches the wheel 190, that is, at a side of the body 184 that is the side opposite the wheel 190. The axle 186 passes through a central portion of the stopper 188. The stopper 188 is configured to be rotatable by a foot of the user of the projection system 100 around the axis of the axle 186 in the XZ plane perpendicular to the axis. When the stoppers 188 are each at a predetermined release position in the circumferential direction around the axis of the axle 186, no braking force acts on the wheel 190, and the movement of the base 150 by the rotation of the casters 182 and 282 is not restricted. On the other hand, when the stoppers 188 are each rotated around the axis of the axle 186 to a predetermined lock position in the circumferential direction, a braking force acts on the wheel 190, and the movement of the base 150 by the rotation of the casters 182 and 282 is restricted, specifically, the rotation of the wheels 190 stops, and the movement of the base 150 by the rotation of the casters 282 stops. The stoppers 188 of the casters 182 and 282 correspond to the locking mechanism.

The base 150, the handle 154, and the moving mechanism 180 described above constitute the transport assisting mechanism, on which the projector 110 is mounted in the projection system 100.

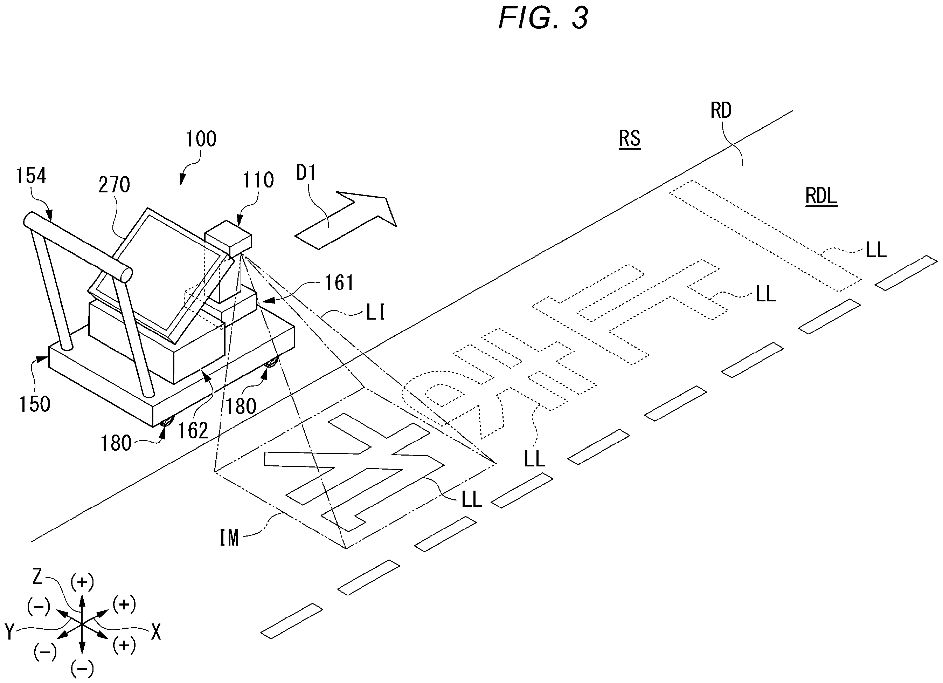

FIGS. 3 to 5 are perspective views showing how auxiliary lines of a road surface marking are drafted by using the projection system 100 to paint the road surface marking on a road surface. It is assumed in the present description that the road surface RD extends in parallel to the XY plane, is elongated along the X direction, and has a predetermined width in the Y direction based on the road traffic law, as shown in FIG. 3. A dividing line is drawn along the X direction at the center of the road surface RD in the Y direction. A road surface RDL at the -Y side of the dividing line in the view of the road surface RD viewed from the -X side toward the +X side is assumed to be a road surface on which auxiliary lines of the road surface marking are drafted by using the projection system 100 and on which the road surface marking is drawn. In the present embodiment, an image IM projected by the projection system 100 is a road surface marking image.

In a first aspect as an example of an aspect in which the auxiliary lines of the road surface marking are drafted, the projector 110 is disposed at a road shoulder surface RS of a road shoulder at the -Y side of the road surface RDL in the view of the road surface RDL viewed from the -X side toward the +X side, as shown in FIG. 3. The road shoulder surface RS corresponds to the movement surface MP described above. In the first aspect, the projection system 100 is disposed as shown in FIG. 2 by way of example. That is, the rotary stage 171 of the first installer 161 is so positioned in the circumferential direction that the image light LI from the projector 110 is output toward the +Y side and the -Z side of the base 150.

In the first aspect, a moving direction D1 of the base 150, that is, the projection system 100 is the direction from the -X side toward the +X side along the X direction. FIG. 3 shows by way of example a case where the road surface marking drawn and drafted on the road surface RDL includes one stop line along the Y direction and vertically written " 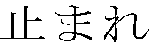 " arranged from the +X side to the -X side. In the first aspect, starting from the character " 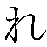 " of the road surface marking, the characters " 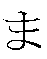 ",and " 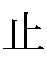 " and the stop line are sequentially drawn toward the +X side. In the first aspect, the projecting direction of the projector 110 is oriented sideways with respect to the moving direction D1 of the base 150, that is, toward the +Y side. In the first aspect, the orientation of the image IM projected from the projector 110 is the orientation from the -X side toward the +X side and is the orientation along the moving direction D1 of the base 150.

An operator that is not shown installs the projection system 100 at the position on the road shoulder surface RS where the projection system 100 drafts " 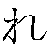 " on the road surface RDL in the X direction, projects the image light LI from the projector 110 onto the road surface RDL, and enlarges and projects an image of the drafted " 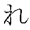 ". An outline LL of " 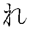 " having an appropriate dimension according to the road traffic law is instantaneously projected onto the road surface RDL. While the outline LL of " 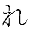 " is projected onto the road surface RDL, the operator, who is not shown, drafts the auxiliary line along a portion or all of the outline LL of " 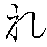 ", for example, with a piece of chalk.

The operator subsequently grips the grip 158 of the handle 154, moves the projection system 100 along the moving direction D1, installs the projection system 100 at a position on the road shoulder surface RS where the projection system 100 drafts " 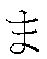 " on the road surface RDL in the X direction, projects the image light LI from the projector 110 onto the road surface RDL, and enlarges and projects the image of the drafted " 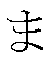 ". The outline LL of " 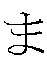 " having appropriate dimensions according to the road traffic law is instantaneously projected onto the road surface RDL. While the outline LL of " 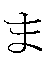 " is projected onto the road surface RDL, the operator drafts the auxiliary line along a portion or all of the outline LL of " 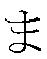 " with a choke or the like. The same process is applied to the road surface marking of " 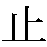 ", and the stop line to draw a draft of the road surface marking configured with one stop line along the Y direction and the vertically written " 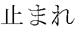 " on the road surface RDL. The operator then applies paint onto the road surface RDL along the draft by using a painting apparatus that is not shown. The road surface marking of the stop line and " 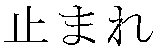 " is thus completed.

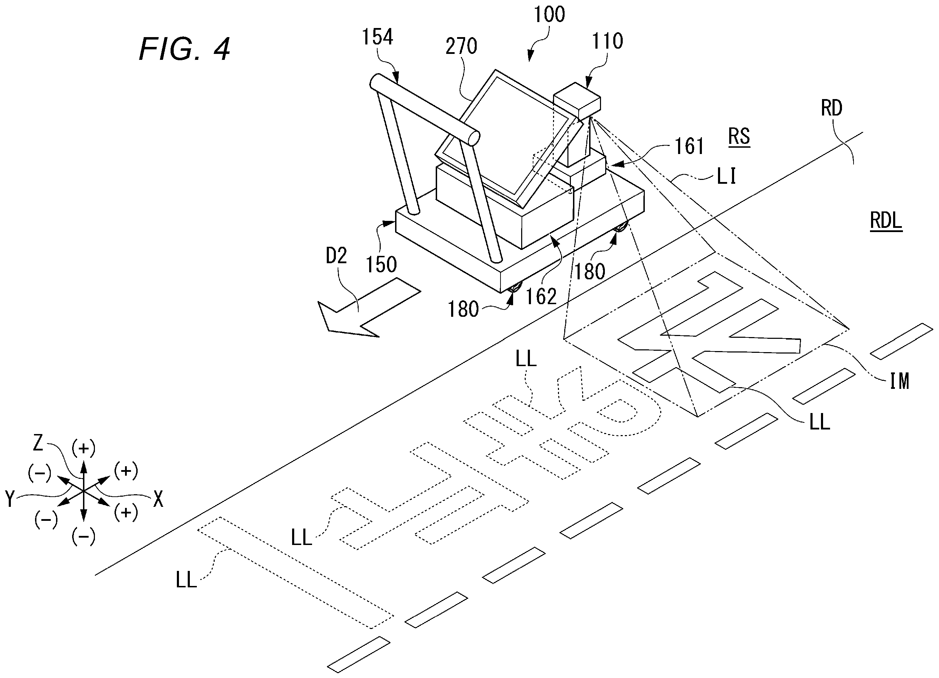

In a second aspect as another example of the aspect in which auxiliary lines of a road surface marking is drafted, the projector 110 is installed at the road shoulder surface RS as shown in FIG. 4, as in the first aspect. Also in the second aspect, the rotary stage 171 of the first installer 161 is so positioned in the circumferential direction that the image light LI from the projector 110 is output toward the +Y side and the -Z side of the base 150.

In the second aspect, a moving direction D2 of the base 150, that is, the projection system 100 is the direction from the +X side toward the -X side along the X direction. FIG. 4 shows by way of example a case where the road surface marking drawn and drafted on the road surface RDL includes one stop line along the Y direction and vertically written " 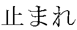 " arranged from the -X side to the +X side. In the second aspect, starting from the character " 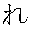 " of the road surface marking, the characters " 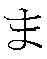 ", and " 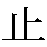 " and the stop line are sequentially drawn toward the -X side. In the second aspect, the projecting direction of the projector 110 is oriented sideways with respect to the moving direction D2 of the base 150, that is, toward the +Y side. Also in the second aspect, the orientation of the image IM projected from the projector 110 is the orientation from the +X side toward the -X side and is the orientation along the moving direction D2 of the base 150.

The operator can install the projection system 100 at a position on the road shoulder surface RS where the projection system 100 drafts "H" on the road surface RDL in the X direction, and complete the work of drafting " 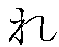 " of the road surface marking on the road surface RDL by carrying out the same process as in the first aspect.

The operator, who is not shown, subsequently grips the grip 158 of the handle 154, moves the projection system 100 along the moving direction D2, installs the projection system 100 at a position on the road shoulder surface RS where the projection system 100 drafts " 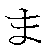 " on the road surface RDL in the X direction, projects the image light LI from the projector 110 onto the road surface RDL, and enlarges and projects the image of the drafted " 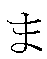 ". The outline LL of " 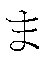 " having appropriate dimensions according to the road traffic law is instantaneously projected onto the road surface RDL. While the outline LL of " 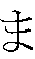 " is projected onto the road surface RDL, the operator drafts the auxiliary line along a portion or all of the outline LL of " 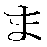 ", for example, with a piece of chalk. The same process is applied to the road surface marking of " 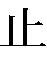 ", and the stop line to draw a draft of the road surface marking configured with one stop line along the Y direction and the vertically written " 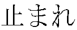 " on the road surface RDL. The operator then applies paint onto the road surface RDL along the draft by using the painting apparatus, which is not shown. The road surface marking of the stop line and " 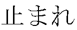 " is thus completed.

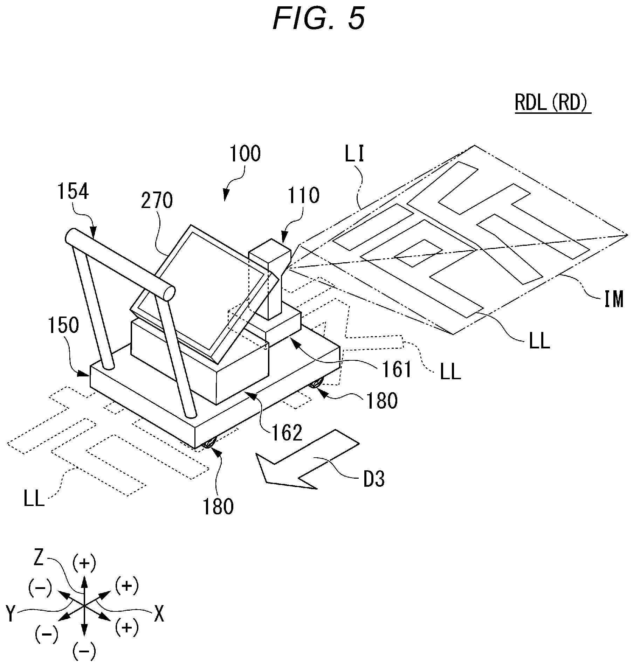

In a third aspect as another example of the aspect in which auxiliary lines of a road surface marking is drafted, the projector 110 is installed at the road surface RDL as shown in FIG. 5. In the third aspect, the projection system 100 is disposed as shown in FIG. 5 by way of example. That is, the rotary stage 171 of the first installer 161 is so positioned in the circumferential direction that the image light LI from the projector 110 is output toward the +X side and the -Z side of the base 150.

In the third aspect, a moving direction D3 of the base 150, that is, the projection system 100 is the direction from the +X side toward the -X side along the X direction. FIG. 5 shows by way of example a case where the road surface marking drawn and drafted on the road surface RDL is horizontally written " 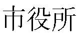 " arranged from the -X side to the +X side. In the third aspect, starting from the character " 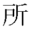 " of the road surface marking, the characters " 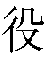 ", and " 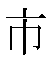 " are sequentially drawn toward the -X side. In the third aspect, the projecting direction of the projector 110 is the opposite direction of the moving direction D3 of the base 150 in the X direction, that is, the direction from the -X side toward the +X side. In the third aspect, the orientation of the image IM projected from the projector 110 is the orientation from the +Y side toward the -Y side and is the orientation that intersects with the moving direction D3 of the base 150.

The operator can install the projection system 100 at a position where the projection system 100 drafts " 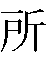 " on the road surface RDL in the X direction, and complete the work of drafting " 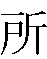 " of the road surface marking on the road surface RDL by carrying out the same process as in the first aspect.

The operator, who is not shown, subsequently grips the grip 158 of the handle 154, moves the projection system 100 along the moving direction D3, installs the projection system 100 at a position where the projection system 100 drafts the other "Tx" on the road surface RDL in the X direction, projects the image light LI from the projector 110 onto the road surface RDL, and enlarges and projects the image of the drafted "Tx". The outline LL of "Tx" having appropriate dimensions according to the road traffic law is instantaneously projected onto the road surface RDL. While the outline LL of "Tx" is projected onto the road surface RDL, the operator drafts the auxiliary line along a portion or all of the outline LL of "Tx", for example, with a piece of chalk. The same process is applied to " 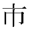 " of the road surface marking to draw a draft of the road surface marking configured with the horizontally written " 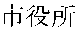 " along the Y direction on the road surface RDL. The operator then applies paint to the road surface RDL along the draft by using the painting apparatus, which is not shown. The road surface marking " 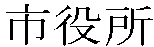 " is thus completed.

A description will next be given about a form in which the operator can preferably draft a road surface marking from a road surface marking image that is the image IM projected onto the road surface RD by the projection system 100 in the present embodiment.

Table 1 shows an example of the relationship among the size of the image IM projected onto the road surface RD with the aspect ratio of the image IM changed, the height H of the output section 132 of the projector 110 from the road surface RD, and the throw ratio of the projection system 100. The size of the image IM is expressed in inch, and the height H of the output section 132 from the road surface RD is expressed in millimeter.

**Table 1**

| Aspect Ratio of image IM | Size of image IM [inch] | Height H [mm] of output section from road surface | Throw Ratio |
|---|---|---|---|
| 16:10 | 80 | 100 | 0.058 |
| | | 300 | 0.174 |
| | | 500 | 0.290 |
| | | 800 | 0.464 |
| | | 1000 | 0.580 |
| 16:9 | 80 | 100 | 0.056 |
| | | 300 | 0.169 |
| | | 500 | 0.282 |
| | | 800 | 0.452 |
| | | 1000 | 0.565 |
| 4:3 | 80 | 100 | 0.062 |
| | | 300 | 0.185 |
| | | 500 | 0.308 |
| | | 800 | 0.492 |
| | | 1000 | 0.615 |
| 16:10 | 200 | 100 | 0.023 |
| | | 300 | 0.070 |
| | | 500 | 0.116 |
| | | 800 | 0.186 |
| | | 1000 | 0.232 |
| 16:9 | 200 | 100 | 0.023 |
| | | 300 | 0.068 |
| | | 500 | 0.113 |
| | | 800 | 0.181 |
| | | 1000 | 0.226 |
| 4:3 | 200 | 100 | 0.025 |
| | | 300 | 0.074 |
| | | 500 | 0.123 |
| | | 800 | 0.197 |
| | | 1000 | 0.246 |

The size of the image IM is the size of the image IM projected onto the road surface RD, and is greater than or equal to 80 inches but smaller than or equal to 200 inches. A road surface marking image having an actual size and drafted on the road surface RD can thus be preferably projected onto the road surface RD. The aspect ratio of the image IM is the ratio of the length of the image IM along the horizontal direction to the length thereof along the vertical direction.

The height H of the output section 132 from the road surface RD is the length from the center of the output section 132 to the road surface RD, onto which the image IM is projected, in other words, the projection distance. It is assumed that the height H of the output section 132 from the road surface RD is greater than or equal to 100 mm but smaller than or equal to 1000 mm. The height H of the output section 132 from the road surface RD is set, for example, at 1000 mm or smaller so as not to exceed the height of the grip 158 from the movement surface MP, and is further set at 100 mm or greater so as to form a large road surface marking image greater than or equal to 80 inches but smaller than or equal to 200 inches, as described above.

The throw ratio of the projection system 100 is a value as a result of the operation of dividing the projection distance, that is, the height H, by the length of the image IM along the horizontal direction. The throw ratio of the projection system 100 is, for example, greater than or equal to 0.023 but smaller than or equal to 0.615. The road surface marking image can thus be projected onto the road surface RD by what is called ultrashort focus projection. The ultrashort focus projection can prevent a blocking object that blocks the image IM from being intentionally or unintentionally interposed between the output section 132 of the projector 110 and the road surface RD, onto which the image IM is projected. The ultrashort focus projection can further eliminate a loss of the road surface marking image and more preferably maintain the state of the road surface marking image projected onto the road surface RD.

The projection system 100 according to the present embodiment described above is a projection system that projects an image used to paint a road surface marking on the road surface RD onto the road surface RD, and includes the projector 110, the first installer 161, the base 150, and the moving mechanism 180. The projector 110 projects the image IM toward the road surface RD. The projector 110 is installed at the first installer 161. The base 150 is provided with the first installer 161. The moving mechanism 180 moves the base 150.

In the projection system 100 according to the present embodiment, which can instantaneously project the image IM containing the outline LL that is the same as that after completion of the work of drafting a road surface marking from the projector 110 onto the road surface RD, allows significant reduction in the period required for the work of drafting the road surface marking in related art. Even a beginner of work relating to drafting a road surface marking can present an accurate outline LL on the road surface RD by using the projection system 100, and advance drawing of the road surface marking. The projection system 100 according to the present embodiment allows the work of drafting a road surface marking to be easily and quickly performed and reduction in the burden to a constructor and an operator.

In related art, a survey on a road surface RD has been performed before the work of drafting a road surface marking. In contrast, the projection system 100 according to the present embodiment can, for example, acquire data on the road surface RD in advance at the stage of creating an original image and can reflect the data in the original image, eliminate the need for the survey on the road surface RD anew immediately before the draft work. Using the projection system 100 can reduce the burden to the constructor and the operator also in this regard.

In related art, when there is a large daytime traffic volume on the road surface RD, on which a road surface marking is drawn, the work of drafting the road surface marking is performed at night with the road closed, or any other measures. In this case, for example, the operator wears a night lighting apparatus on the head or any other body portion and performs the draft work. In the projection system 100 according to the present embodiment, however, the image light LI projected from the projector 110 onto the road surface RD also serves as the illumination for the draft work, so that the operator does not need to wear a lighting apparatus, and there is no need to separately install a strong lighting apparatus. In addition, using the projection system 100 according to the present embodiment can shorten the period of the work of drawing a road surface marking including the draft work, and further shorten the period for which the road is closed or any other measures are taken. Furthermore, even when the projection system 100 according to the present embodiment is used in the daytime, the outline LL of the image IM projected onto the road surface RD is likely to be visually recognized as a light emitter. Also in this regard, using the projection system 100 can reduce the burden to the constructor and the operator.

In the projection system 100 according to the present embodiment, the projector 110 can be mounted on the first installer 161 and stabilized with respect to the base 150. In the projection system 100 according to the present embodiment, in which the base 150 at which the projector 110 is installed is movable by the moving mechanism 180, multiple road surface markings can be efficiently drafted by one projection system as compared, for example, with an apparatus of related art that includes no moving mechanism but directly displays a road surface marking in a predetermined direction.

It has been studied in related art, for example, to project a road surface marking from a lighting portion of a vehicle onto a road surface, but it is difficult for such a technology to instantaneously project and stably display an image as a draft of the road surface marking on the road surface, unlike the projection system 100 according to the present embodiment.

In the projection system 100 according to the present embodiment, the projector 110 includes the light modulator 124, which modulates the color light (light) output from the light source 122, and the projection system (projection optical apparatus) 126, which projects the image light (light) LI output from the light modulator 124 as the image IM. The projection system 126 includes the reflection mirror 130, which deflects the optical path of the image light LI incident from the light modulator 124.

In the projection system 100 according to the present embodiment, in which the projection system 126 includes the reflection mirror 130, the projector 110 can be disposed at a position close to the road surface RD in the Z direction, that is, at the -Z side in the region at the +Z side of the base 150, so that the output section 132 of the projector 110 can be brought close to the road surface RD. The thus configured projection system 100 can reduce a risk that a blocking object that blocks the image light LI and the image IM is intentionally or unintentionally interposed between the projector 110 and the road surface RD, and can therefore more preferably maintain the state in which the image IM is projected onto the road surface RD.

In the projection system 100 according to the present embodiment, the projector 110 includes the output section 132, which outputs the image light (image in the form of light) LI out of the exterior enclosure 120 of the projector. The size of the image IM on the road surface is greater than or equal to 80 inches but smaller than or equal to 200 inches. The height of the output section 132 from the road surface RD is greater than or equal to 100 mm but smaller than or equal to 1000 mm. The throw ratio of the projection system 100 according to the present embodiment is greater than or equal to 0.023 but smaller than or equal to 0.615.

In the projection system 100 according to the present embodiment, the projector 110 is disposed at a position close to the road surface RD, and the image IM is projected at a large image size. The projection system 100 according to the present embodiment can project the image IM having a size large enough to project a drafted road surface marking at the actual size onto the road surface RD, can reduce a risk that a blocking object that blocks the image light LI and the image IM is intentionally or unintentionally interposed between the projector 110 and the road surface RD, and can therefore more preferably maintain the state in which the image IM is projected onto the road surface RD.

In the projection system 100 according to the present embodiment, the base 150 includes the second installer 162, at which the electronic instrument 250, which controls the image IM projected by the projector 110, is installed.

In the projection system 100 according to the present embodiment, the electronic instrument 250 can readily adjust the image IM suitable for drafting a road surface marking, and can be mounted on the second installer 162 and stabilized with respect to the base 150.

The projection system 100 according to the present embodiment further includes the handle 154 including the grip 158 gripped by the user to move the base 150. In the projection system 100 according to the present embodiment, the projector 110 includes the output section 132, which outputs the image light (light) LI as an image out of the exterior enclosure 120. The height of the output section 132 from the road surface RD is smaller than the height of the grip 158 from the road surface RD.

The projection system 100 according to the present embodiment allows the output section 132 of the projector 110 to be brought closer to the road surface RD than the position where the user grips the grip 158.

In the projection system 100 according to the present embodiment, for example, the projecting direction of the projector 110 is oriented sideways with respect to the moving directions D1 and D2 of the base 150. In this case, the orientation of the image IM projected from the projector 110 is the orientation along the moving directions D1 and D2 of the base 150.

The projection system 100 according to the present embodiment allows the projector 110 to be located at the road shoulder surface RS alongside the road surface RD on which the road surface marking is drafted, project the image IM onto the road surface RD, and instantaneously draft the road surface marking in the orientation along the direction in which the road surface RD extends.

In the projection system 100 according to the present embodiment, for example, the projecting direction of the projector 110 is opposite the moving direction D3 of the base 150. In this case, the orientation of the image IM projected from the projector 110 intersects with the moving direction D3 of the base 150.

The projection system 100 according to the present embodiment can project the image IM onto the road surface RD with the projection system 100 located at the road surface RD on which the road surface marking is drafted, and instantaneously draft the road surface marking in an orientation that intersects with the direction in which the road surface RD extends.

The projection system 100 according to the present embodiment further includes, for example, the bodies (movement restricting mechanism) 184, which restrict the moving directions D1, D2, and D3 of the base 150 moved with the aid of the casters 282, which serve as the moving mechanism 180, to a predetermined direction.

The projection system 100 according to the present embodiment, in which the moving direction of the wheels 190 and the base 150 is determined to be a predetermined direction by the bodies 184, which are portions of the casters 282 and cannot rotate with respect to the movement surface MP and the road surface RD, allows accurate movement of the base 150 and stabilization of the base 150.

The projection system 100 according to the present embodiment further includes the stoppers (locking mechanism) 188, which restrict the movement of the base 150 moved with the aid of the moving mechanism 180.

In the projection system 100 according to the present embodiment, the stoppers 188 in the casters 182 and 282, which serve as the moving mechanism 180, can be switched to the lock position to readily stop the rotation of the wheels 190 to prevent unexpected movement of the base 150. For example, when the road surface RD inclines with respect to the horizontal plane, the projection system 100 can be stabilized on the movement surface MP and the road shoulder surface RS by switching the stoppers 188 from the release position to the lock position during the period for which the projection system 100 projects the image IM used to draft the road surface marking onto the road surface RD. The burden to the constructor and the operator can thus be reduced.

The projection system 100 according to the present embodiment further includes the rotary stages (rotating mechanism) 171, 172, and 173. The rotary stage 171 is provided at the first installer 161, and rotates the projector 110 to change the projecting direction of the projector 110 with respect to the moving directions D1, D2, and D3 of the base 150.

In the projection system 100 according to the present embodiment, the direction in which the image light LI is output from the projector 110 and the orientation of the image IM can be freely and easily adjusted in accordance with the relative positional relationship between the surface at which the projection system 100 is installed, that is, the movement surface MP and the road surface RD and the relative relationship between the position at which the projection system 100 is installed and the position where the image IM should be projected onto the road surface RD. The projection system 100 is thus used over a widened range.

In the projection system 100 according to the present embodiment, the rotary stage (rotating mechanism) 171 rotates the projector 110 in a direction along the road surface RD.

In the projection system 100 according to the present embodiment, the rotary stage 171 can be used to freely and easily adjust the direction in which the image light LI from the projector 110 is projected in the XY plane parallel to the road surface RD.

In the projection system 100 according to the present embodiment, the rotary stages (rotating mechanism) 172 and 173 rotate the projector 110 in the Z direction, which intersects with the direction along the road surface RD.

In the projection system 100 according to the present embodiment, the rotary stages 172 and 173 can be used to adjust the posture of the projector 110 in a plane containing the Z direction perpendicular to the road surface RD to freely and readily adjust the orientation of the image IM to be projected from the projector 110 onto the road surface RD.

A preferable embodiment of the present disclosure has been described above in detail. The present disclosure is, however, not limited to the specific embodiment, and a variety of modifications and changes can be made to the embodiment within the scope of the substance of the present disclosure described in the claims.

### Summary of present disclosure

The present disclosure will be summarized below as additional remarks.

(Additional remark 1) A projection system configured to project an image used to paint a road surface marking on a road surface onto the road surface, the projection system including: a projector configured to project the image toward the road surface; a first installer at which the projector is installed; a base at which the first installer is provided; and a moving mechanism configured to move the base.

The configuration described in the additional remark 1, in which a drafted image such as the outline of the road surface marking is instantaneously projected from the projector onto the road surface, shortens the period required for the work of drafting the road surface marking performed in related art. The configuration described in the additional remark 1 allows the work of drafting a road surface marking to be easily and quickly performed and reduction in the burden to a constructor and an operator.

(Additional remark 2) The projection system according to the additional remark 1, wherein the projector includes a light modulator configured to modulate light output from a light source, and a projection optical apparatus configured to project light output from the light modulator as the image, wherein the projection optical apparatus includes a reflection mirror configured to deflect an optical path of the light incident from the light modulator.

According to the configuration described in the additional remark 2, the projector can be disposed at a position close to the road surface. The thus configured projection system can reduce a risk that a blocking object that blocks the image is intentionally or unintentionally interposed between the projector and the road surface, and can therefore more preferably maintain the state in which the image is projected onto the road surface.

(Additional remark 3) The projection system according to the additional remark 1 or 2, wherein the projector includes an output section from which the image in the form of light is output out of an exterior enclosure of the projector, a size of the image at the road surface is greater than or equal to 80 inches but smaller than or equal to 200 inches, a height of the output section from the road surface is greater than or equal to 100 mm but smaller than or equal to 1000 mm, and a throw ratio of the projector is greater than or equal to 0.023 but smaller than or equal to 0.615.

According to the configuration described in the additional remark 3, the projector can be disposed at a position close to the road surface, and furthermore, the image can be projected at a large image size. The thus configured projection system can project the image having a size large enough to project the drafted road surface marking at the actual size onto the road surface, can reduce a risk that a blocking object that blocks the image is intentionally or unintentionally interposed between the projector and the road surface, and can therefore more preferably maintain the state in which the image is projected onto the road surface.

(Additional remark 4) The projection system according to any one of the additional remarks 1 to 3, wherein the base includes a second installer at which an electronic instrument configured to control the image projected by the projector is installed.

The configuration described in the additional remark 4 allows the electronic instrument to readily adjust the image suitable for the work of drafting a road surface marking, the electronic instrument to be mounted on the second installer, and the electronic instrument stabilized with respect to the base.

(Additional remark 5) The projection system according to any one of the additional remarks 1 to 4, further including a handle including a grip gripped by a user to move the base, wherein the projector includes an output section from which the image in the form of light is output out of an exterior enclosure of the projector, and a height of the output section from the road surface is smaller than a height of the grip from the road surface.

The configuration described in the additional remark 5 allows the output section of the projector to be brought closer to the road surface than the position where the user grips the grip.

(Additional remark 6) The projection system according to any one of the additional remarks 1 to 5, wherein a projecting direction of the projector is oriented sideways with respect to a moving direction of the base, and an orientation of the image projected from the projector is an orientation along the moving direction of the base.

The configuration described in the additional remark 6 allows the projector to be located at a road shoulder surface alongside the road surface on which the road surface marking is drafted, project the image onto the road surface, and draft the road surface marking in the orientation along the direction in which the road surface extends.

(Additional remark 7) The projection system according to any one of the additional remarks 1 to 5, wherein a projecting direction of the projector is a direction opposite a moving direction of the base, and an orientation of the image projected from the projector is an orientation that intersects with the moving direction of the base.

The configuration described in the additional remark 7 allows the projector to be located on the road surface on which the road surface marking is drafted, project the image onto the road surface, and draft the road surface marking in an orientation that intersects with the direction in which the road surface extends.

(Additional remark 8) The projection system according to any one of the additional remarks 1 to 7, further including a movement restricting mechanism configured to restrict a moving direction of the base moved by the moving mechanism to a predetermined direction.

According to the configuration described in the additional remark 8, since the moving direction of the base is determined to be the predetermined direction, the base can be accurately moved and stabilized.

(Additional remark 9) The projection system according to any one of the additional remarks 1 to 8, further including a locking mechanism configured to restrict the movement of the base moved by the moving mechanism.

The configuration described in the additional remark 9 can easily stop the operation of the moving mechanism and prevent unexpected movement of the base. Even when the road surface inclines with respect to the horizontal plane, the projection system can be stationary on the installation surface and the road marking can be smoothly drafted during the period for which the image is projected from the projector.

(Additional remark 10) The projection system according to any one of the additional remarks 1 to 9, further including a rotating mechanism provided at the first installer and configured to rotate the projector to change a projecting direction of the projector with respect to the moving direction of the base.

In the configuration described in the additional remark 10, the direction in which the light from the projector is output and the orientation of the image can be freely and easily adjusted, so that the projection system can be used over a widened range.

(Additional remark 11) The projection system according to the additional remark 10, wherein the rotating mechanism is configured to rotate the projector in a direction along the road surface.

In the configuration described in the additional remark 11, the direction in which the light from the projector is output can be freely and easily adjusted.

(Additional remark 12) The projection system according to the additional remark 10, wherein the rotating mechanism is configured to rotate the projector in a direction that intersects with a direction along the road surface.

In the configuration described in the additional remark 12, the orientation of the image projected from the projector can be freely and easily adjusted.

## Claims

1. A projection system configured to project an image used to paint a road surface marking on a road surface onto the road surface, the projection system comprising:
a projector configured to project the image toward the road surface;
a first installer at which the projector is installed;
a base at which the first installer is provided; and
a moving mechanism configured to move the base.

2. The projection system according to claim 1, wherein
the projector includes
a light modulator configured to modulate light output from a light source, and
a projection optical apparatus configured to project light output from the light modulator as the image,
wherein the projection optical apparatus includes a reflection mirror configured to deflect an optical path of the light incident from the light modulator.

3. The projection system according to claim 1, wherein
the projector includes an output section from which the image in the form of light is output out of an exterior enclosure of the projector,
a size of the image at the road surface is greater than or equal to 80 inches but smaller than or equal to 200 inches,
a height of the output section from the road surface is greater than or equal to 100 mm but smaller than or equal to 1000 mm, and
a throw ratio of the projector is greater than or equal to 0.023 but smaller than or equal to 0.615.

4. The projection system according to claim 1, wherein
the base includes a second installer at which an electronic instrument configured to control the image projected by the projector is installed.

5. The projection system according to claim 1, further comprising
a handle including a grip gripped by a user to move the base,
wherein the projector includes an output section from which the image in the form of light is output out of an exterior enclosure of the projector, and
a height of the output section from the road surface is smaller than a height of the grip from the road surface.

6. The projection system according to claim 1, wherein
a projecting direction of the projector is oriented sideways with respect to a moving direction of the base, and
an orientation of the image projected from the projector is an orientation along the moving direction of the base.

7. The projection system according to claim 1, wherein
a projecting direction of the projector is a direction opposite a moving direction of the base, and
an orientation of the image projected from the projector is an orientation that intersects with the moving direction of the base.

8. The projection system according to claim 1, further comprising
a movement restricting mechanism configured to restrict a moving direction of the base moved by the moving mechanism to a predetermined direction.

9. The projection system according to claim 1, further comprising
a locking mechanism configured to restrict the movement of the base moved by the moving mechanism.

10. The projection system according to claim 1, further comprising
a rotating mechanism provided at the first installer and configured to rotate the projector to change a projecting direction of the projector with respect to a moving direction of the base.

11. The projection system according to claim 10, wherein
the rotating mechanism is configured to rotate the projector in a direction along the road surface.

12. The projection system according to claim 10, wherein
the rotating mechanism is configured to rotate the projector in a direction that intersects with a direction along the road surface.
